(19) Europäisches Patentamt / European Patent Office / Office européen des brevets

(11) **EP 3 195 456 B1**

(12) **EUROPEAN PATENT SPECIFICATION**

(45) Date of publication and mention
of the grant of the patent:
**13.09.2023 Bulletin 2023/37**

(51) International Patent Classification (IPC):
*H02M 1/10* $^{(2006.01)}$     *H02M 3/335* $^{(2006.01)}$
*H02M 7/155* $^{(2006.01)}$     *H02M 7/21* $^{(2006.01)}$
*G05F 1/565* $^{(2006.01)}$     *H02M 1/36* $^{(2007.01)}$

(21) Application number: **15842059.6**

(22) Date of filing: **16.09.2015**

(52) Cooperative Patent Classification (CPC):
**H02M 1/36; H02M 3/33515; H02M 3/33523**

(86) International application number:
**PCT/US2015/050526**

(87) International publication number:
**WO 2016/044487 (24.03.2016 Gazette 2016/12)**

(54) **CONSTANT ON-TIME (COT) CONTROL IN ISOLATED CONVERTER**

CONSTANT-ON-TIME (COT)-STEUERUNG IN EINEM ISOLIERTEN WANDLER

COMMANDE DE TEMPS DE MARCHE CONSTANT (COT) DANS UN CONVERTISSEUR ISOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2014 CN 201410483703**
**07.12.2014 US 201414562727**

(43) Date of publication of application:
**26.07.2017 Bulletin 2017/30**

(73) Proprietor: **Alpha and Omega Semiconductor (Cayman) Ltd.**
**Grand Cayman KY1-1107 (KY)**

(72) Inventors:
• **LIN, Tien-Chi**
**New Taipei City 22046 (TW)**
• **LIU, Chih-Yuan**
**Zhubei City 30274 (TW)**
• **HSU, Yung-Chuan**
**Zhubei City 30274 (TW)**
• **HUANG, Pei-Lun**
**Zhubei City 30274 (TW)**

(74) Representative: **Hellmich, Wolfgang**
**European Patent and Trademark Attorney**
**Lortzingstrasse 9 / 2. Stock**
**81241 München (DE)**

(56) References cited:
EP-A1- 2 256 912      WO-A1-2011/051824
RU-C1- 2 457 601      US-A- 5 498 995
US-A- 5 663 874       US-A1- 2001 015 900
US-A1- 2006 083 032   US-A1- 2012 099 345
US-A1- 2013 235 620   US-B1- 6 456 511

• Chuan Ni ET AL: "Adaptive Constant On-Time (D-CAP(TM)) Control Study in Notebook Applications", , 31 December 2007 (2007-12-31), XP055462202, Retrieved from the Internet: URL:http://www.ti.com/lit/an/slva281b/slva 281b.pdf [retrieved on 2018-03-23]
• Parasuram Vivek: "Extending Efficiency in a DC/DC converter with automatic mode switching from PFM to PWM", , 31 May 2014 (2014-05-31), XP055462353, Retrieved from the Internet: URL:https://repository.asu.edu/attachments /134742/content/Vivek_asu_0010N_13578.pdf [retrieved on 2018-03-23]

**Description**

**TECHNICAL FIELD**

The present invention relates to a constant on-time isolated converter. The isolated converter of this invention implements constant on-time control to regulate output voltage.

**BACKGROUND ART**

With recent advances in technology, electronic products have been developed to meet the diverse needs in everyday life. As these products are made of various electronic components with different power supply and voltage requirements, the AC power supply from wall needs to be converted to appropriate voltages for each of the electronic components to ensure proper operation.

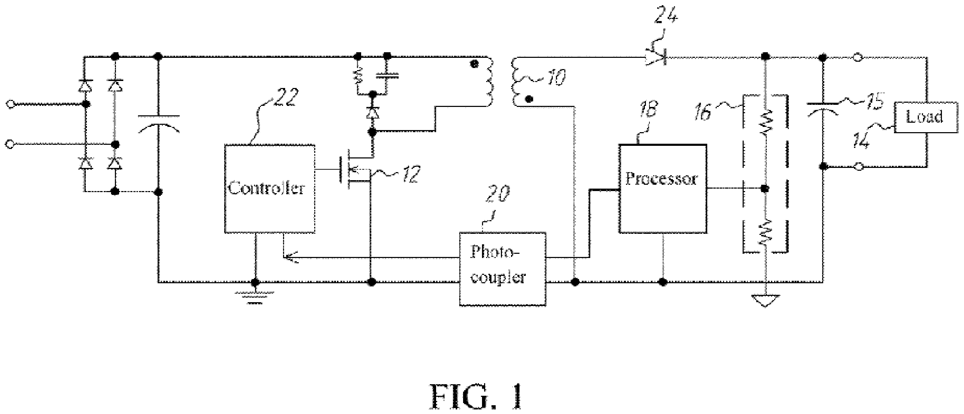

Conventional AC / DC Converters implement an isolated voltage divider design. After coupling the AC power with rectifiers, a transformer is used to convert the high voltage AC power to low voltage DC power that can be used by the devices. As shown in FIG. 1, the conventional power converter includes a transformer 10, which includes a primary side connected to an electronic switch 12 and a secondary side connected to a load 14, an output capacitor 15 and a voltage divider 16 connected to a processor 18. Through a photo-coupler 20, the processor 18 is connected to a controller 22 that is connected to electronic switch 12 to control its switching state. When a voltage is applied across load 14, the voltage divider 16 retrieves a feedback voltage from the load and sends it to the processor 18 that generates an analog signal accordingly and then transmits it from the secondary side through the photo-coupler 20 to the controller 22 in the primary side. Controller 22 changes the ON/OFF state of electronic switch 12 according to this analog signal. Since the processor 18 comprises of TL431 (three-terminal programmable shunt regulator) and VM (voltage-mode) compensation circuit, it uses zero/ pole compensation to compensate the loop gain and bandwidth to reduce the ripple signal of the load voltage, stabilizing the whole system. However, the controller 22 is located on the primary side and thus cannot detect the load voltage directly. There is also delay in TL431 and the VM compensation circuit transmitting the signal generated from the feedback voltage of the load to the controller 22, resulting in the load voltage not being stabilized quickly. Furthermore, it is difficult to be controlled in a continuous current mode (CCM) when having a synchronous rectifier in the secondary side.

It is within this context that embodiments of the present invention arise.

US 6,456,511 B1 discloses a start-up circuit for a flyback converter having a secondary pulse width modulation. A switching power supply includes a transformer having a primary winding on a primary side and two secondary windings on a secondary side. The primary side includes a switching transistor, preferably an N-channel enhancement mode power metal-oxide-silicon field effect transistor (MOSFET), having a drain electrode connected to one side of the primary winding and a source electrode connected to primary side ground return. The transistor includes an insulated gate connected to a resistor and a zener diode connected to primary side ground return. The zener diode clamps the gate voltage to a safe level. The secondary side includes a rectifier diode which rectifies current induced in the secondary winding. A network including capacitor, an inductor and a capacitor receives and filters the resultant DC and provides it as an output voltage at a terminal for use externally, such as for charging lithium-ion battery cells. A current sense resistor and a resistive divider network including two resistors provide current and voltage monitoring values to a charge control circuit. A diode is connected to rectify current induced in the second secondary winding relative to secondary side ground, and a small value startup smoothing capacitor is included to provide DC to the charge control circuit. The charge control circuit includes an output voltage monitoring connection to the output node, a current monitoring connection to a node between the resistors, and a constant current mode sensing connection made to a node between the two other resistors. Secondary voltage is sensed via the voltage sense connection and internally compared within a reference amplifier with an internal voltage reference level. The output of reference amplifier is then compared to a voltage ramp generated by a ramp oscillator within an error amplifier to produce a logic level setting a flip-flop. The flip-flop is reset upon flyback of the ramp oscillator. A resultant waveform comprises a pulse width modulation control signal which is gated through an AND gate and amplified by a buffer amplifier and supplied as the gate control signal on an connection, through a blocking capacitor and the secondary of pulse transformer to the gate of the primary side switching MOSFET. The current sensing connection detects the instantaneous secondary current for fault protection. The secondary current is proportional to the primary current immediately after the primary side MOSFET switch turns off. Within the current control circuit, output current is sensed at the connection and compared to a reference voltage in an error amplifier which puts out a current limit logic control which controls gating of the PWM control signal via the AND gate. The constant current sensing connection is applied as an error voltage to one input of an error amplifier and compared against a reference voltage, if a constant current regulation mode is selected in lieu of a constant voltage mode by a switch.

Chuan Ni et al: "Adaptive Constant On-Time (D-CAP (TM)) Control Study in Notebook Applications", Dec. 31, 2017, XP055462202, shows a constant on-time control block diagram. This control method uses the output ripple as a PWM ramp signal to compare with the reference voltage to regulate the voltage. It has several advantages over voltage mode and current mode. First, it does not require loop compensation network and makes design easier. Second, it can achieve a fast transient response because it no longer employs the error amplifier for voltage regulation. In addition, it has seamless transition from PFM in the light load condition to pseudo PWM mode in the heavy load condition. However, the switching frequency changes with input voltage and load condition which makes this kind of control modes unattractive in the portable application. Adaptive on-time control (D-CAP™ mode) is able to dynamically adjust the on-time duration based on the input voltage, output voltage, and load current so that it can achieve relative constant frequency operation. It not only inherits the merit of ripple mode control scheme mentioned above, but also keeps relatively stable switching frequency during its static operation which minimizes the EMI interference at some sensitive bands of certain frequencies in the system. The simplified block diagram of a buck converter uses D-CAP™ mode.

US 5,663,874 relates to the field of multiple output DC-to-DC converters. A voltage source is coupled to a first terminal of a primary transformer winding and coupled to supply power to a controller. A second terminal of the primary transformer winding is coupled to a drain of a first NMOSFET. A source of the first NMOSFET is coupled to a ground node. A gate of the first NMOSFET is coupled to be controlled by the controller by a first ouput signal. The gates of a second, third and fourth NMOSFET are all coupled to be controlled by the controller by a second ouput signal. The drains of the second, third and fourth NMOSFET are connected to the first terminals of three secondary windings, respectively. All windings are inductively coupled. The sources of the second, third and fourth NMOSFET are connected to a voltage divider consisting of three series-connected to a first, second and third resistor. The first resistor is connected to a SENSE input of the controller. The third resistor is connected to the ground node. A second terminal of the second secondary transformer winding is coupled to a first terminal of a second capacitor, to a second output voltage node and to the controller for providing a feedback voltage signal to the controller. A second terminal of the second capacitor is coupled to the ground node. The feedback voltage signal is devided by a voltage divider. The divided voltage is provided to an inverting input to a feedback transconductance amplifier. A reference voltage level is coupled to a non-inverting input to the feedback transconductance amplifier.US 5,498,955 discloses an improved controller circuitry for a switching power supply. A primary driver is provided on the primary side. Starting from US 6,456,511 B1, the object of this invention is to provide a more efficient converter.

This object is achieved by a constant on-time isolated converter according to claim 1.

Preferred embodiments are mirrored by the dependent claims.

## BRIEF DESCRIPTION OF DRAWINGS

FIG. 1 is a circuit diagram of a conventional isolated converter.
FIG. 2 is a circuit diagram of an isolated converter according to a first embodiment of the present invention.
FIG. 3 A shows the waveform of the feedback voltage DV or the detection voltage DS and the control signal.
FIG. 3B shows the waveform of the feedback voltage DV or the detection voltage DS and another control signal.
FIG. 4 shows the waveforms of D, M, DI and DS signals of the first embodiment of the present invention.
FIG. 5 is a circuit diagram of an isolated converter according to a second embodiment of the present invention.
FIG. 6 is a circuit diagram of an isolated converter according to a third embodiment of the present invention.
FIG. 7 shows the waveform of the detection voltage and the control signal of the present invention.
FIG. 8 shows the waveform of D1 signal, TX signal and RX signal.

DESCRIPTION OF THE SPECIFIC EMBODIMENTS

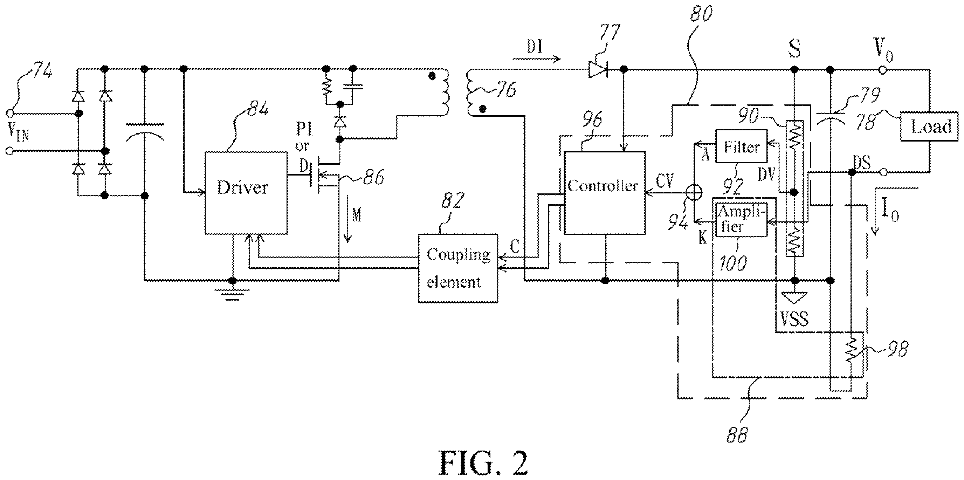

FIG. 2 is a circuit diagram of an isolated converter according to a first embodiment of the present invention. Referring to FIG. 2, the constant on-time isolated converter is connected to an input terminal 74 to receive an input voltage $V_{IN}$. This constant on-time isolation converter comprises a transformer 76 with primary side and secondary side, where the primary side is connected to the input terminal 74 and the secondary side is connected to a diode 77, a load 78 and an output capacitor 79. The anode of the diode 77 is connected to the secondary side of transformer 76 while its cathode is connected to load 78 and the output capacitor 79. There is a ripple signal on the secondary side of the transformer 76, which results in an output voltage Vo and an output current $I_O$ across the load 78. This ripple signal has an AC component and a DC component. The average value of the ripple signal voltage is the voltage value of the DC component. The voltage value of the AC component is obtained by subtracting the voltage value of the DC component from the voltage of the ripple signal. The cathode of diode 77, the secondary side of the transformer 76 and load 78 are connected to a processor 80, which captures the output AC voltage A of the AC component and the output current $I_O$ of the ripple signal. Processor 80 is preset with a reference voltage, the processor 80 converts the output current $I_O$ to a process voltage K. Since the output current $I_O$ is an AC/DC signal, the process voltage K is also an AC/DC voltage signal, with the DC component being much larger than the AC component. Therefore, the process voltage K includes an AC component and a DC component and its average voltage value is the voltage value of the DC component. The processor 80 utilizes a filter 92 to substrate the voltage value of the DC component of the feedback voltage DV, thus obtaining the AC voltage A of the AC component. The processor 80 presets the voltage value of the DC component of the process voltage K to be equal to or slightly higher than the reference voltage and generates a control signal C according to the AC voltage A and the process voltage K. For example, the processor 80 combines the AC voltage A and the process voltage K to generate a control voltage CV and based on this and the reference voltage generates the control signal C. The transmission medium between the primary side and the secondary side can be electrical, magnetic, piezoelectric or optical components. The processor 80 is connected to at least one coupling element 82, such as a capacitor, a transformer, a piezoelectric element or an optical coupling element, which is connected to the primary side and the secondary side of the transformer 76 to transmit the control signal C from the secondary side to the primary side. The input terminal 74, the primary side of the transformer 76 and the coupling element 82 are connected to a driver 84, which receives the control signal C and then amplifies it to generate a digital signal D. The primary side of the transformer 76 and the drive 84 are connected to an electronic switch 86, such as N-channel MOSFET or a bipolar junction transistor, which receives the digital signal D and accordingly changes its ON/OFF state to control the input voltage $V_{IN}$ received by the transformer 76, and then to regulate the output voltage Vo and output current $I_O$ through the diode 77, where the duration of the electronic switch 86 ON/OFF state is determined by the moment the control signal C changes from negative to positive and the moment it changes from positive to negative, for example, if the control signal C is a clock signal, when the clock signal changes from negative to positive, electronic switch 86 is turned on and remains on until the clock signal goes from positive to negative, i.e., the ON state of the electronic switch 86 is ended thus the electronic switch 86 is turned off and remains off until when the clock signal changes from negative to positive again, i.e., the OFF state of electronic switches 86 is ended, and it is turned on again.

Driver 84 receives the input voltage $V_{IN}$ from the input terminal 74 and generates a first pulse signal P1 to the electronic switch 86, which changes the ON/OFF state of the electronic switch 86 accordingly, to control the input voltage $V_{IN}$ received by transformer 76, which generates the ripple signal, the output voltage Vo and the output current $I_O$ through diode 77. Then processor 80 generates a control signal C, sends it to the driver 84 through the coupling element 82, hence the driver 84 stops generating the first pulse signal P1.

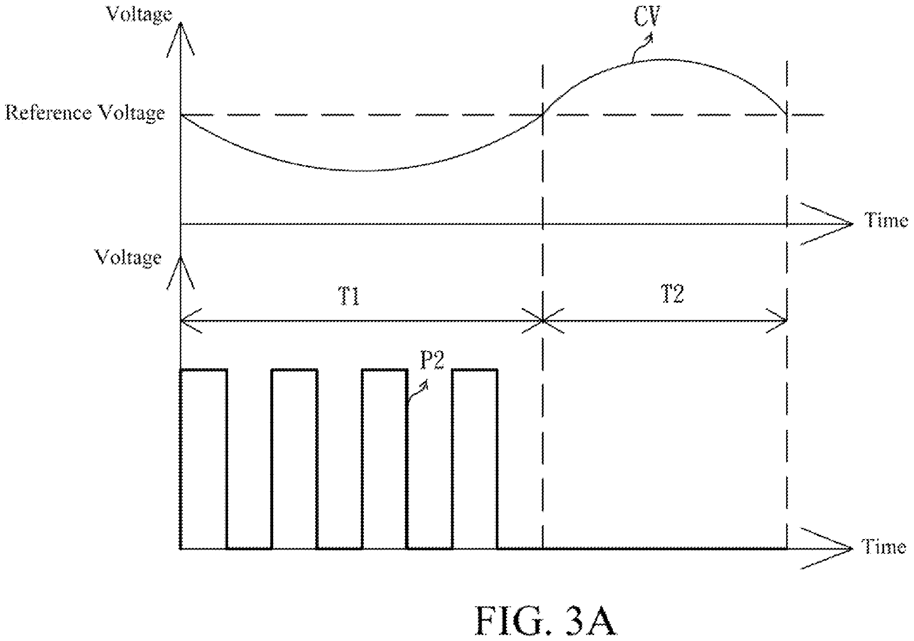

Referring to FIG. 2 and FIG. 3A, the controller 96 is provided with a preset reference voltage, hence when the control voltage CV is less than the reference voltage, the control signal C is a second pulse signal P2 with at least one cycle, i.e., the waveform of plural cycles appearing within time period T1 as shown in Fig. 3A. The second pulse signal P2 in each of the first half cycle is at a high voltage level and in each of the second half cycle is at a low voltage level. When the control voltage CV is greater than the reference voltage, i.e., within time period T2, the control signal C is at the low voltage level. The second pulse signal P2 in each of the first half cycle is at the high voltage level and in each of the second half cycle is at the low voltage level. When the detection voltage DS is greater than the reference voltage, i.e., within time period T2, the control signal C is at the low voltage level.

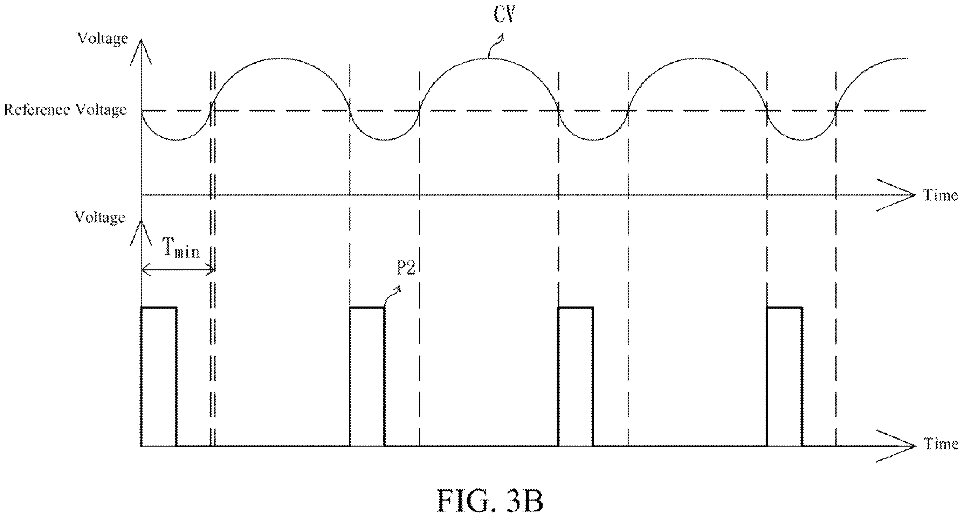

Referring to FIG. 3B and FIG. 2, the processor 80 comprises a current-voltage converter 88, a voltage divider 90, a filter 92, an adder 94 and a controller 96. Current-voltage converter 88 is connected to a load 78 and retrieves and converts the output current $I_O$ into the process voltage K. Voltage divider 90 is connected to a low potential VSS, the cathode of diode 77, the secondary side of transformer 76 and the load 78. The voltage divider 90 receives the output voltage Vo and captures the feedback voltage DV. Filter 92 is connected to the voltage divider 90, thus receives and filters the feedback voltage DV to produce AC voltage A. The adder 94 is connected to the filter 92 and the current-voltage converter 88, thus receives and combines the AC voltage A and process voltage K together to generate a control voltage CV. The controller 96, which has a preset reference voltage and a preset period $T_{min}$, is connected to the low potential VSS, the coupling element 82, the adder 94, the secondary side of the transformer 76 and the load 78, so as to receive the control voltage CV, and with the reference voltage, generates the control signal C. When the control voltage CV is less than the reference voltage, within the preset period $T_{min}$, the control signal C is a second pulse signal P2 of at least one cycle, where the voltage in each of the first half cycle of the second pulse signal is at a high voltage level and the voltage in each of the second half cycle is at a low voltage level. Then, at the end of the preset period $T_{min}$, when the control voltage CV is greater than the reference voltage, the control signal C is at a low voltage level. Current-voltage converter 88 comprises a resistor 98 and an amplifier 100. The resistor 98 is connected to the load 78 and the low potential VSS, and the output current $I_O$ flows through the resistor 98 thus generating the detection voltage DS across the resistor 98. Amplifier 100 is connected to adder 94, load 78 and resistor 98, receives and amplifies the detection voltage DS generating the process voltage K.

In operation of this embodiment, firstly, the driver 84 receives the input voltage $V_{IN}$ from the input terminal 74 generating a first pulse signal P1 to the electronic switch 86, thus the ON/OFF state of the electronic switch 86 is changed accordingly, which controls the input voltage $V_{IN}$ received by the transformer 76 and through the diode 77 generating a ripple signal on the secondary side of the transformer 76, and at the same time generating an output voltage Vo and an output current $I_O$ across the load 78, and via transformer 76 providing power to the controller 96. Then, the output current flows through the resistor 98 generating the detection voltage DS across the resistor 98, in addition, the voltage divider 90 receives the output voltage Vo and captures the feedback voltage DV of the output voltage Vo. The amplifier 100 receives and amplifies the detection voltage DS and thus generates the process voltage K, while the filter 92 receives and filters the feedback voltage DV producing the AC voltage A. Then, the adder 94 receives and combines the AC voltage A and the process voltage K generating the control voltage CV. The controller 96 receives the control voltage CV and, with the reference voltage, generates the control signal C. For example, when the control voltage CV is less than the reference voltage, the control signal C, in the preset time period $T_{min}$, is the second pulse signal P2 of at least one cycle. Then, at the end of the preset time period $T_{min}$, when the control voltage CV is greater than the reference voltage, the control signal C is at a low voltage level. The controller 96 uses the duration between the crossing of the control signal C from negative to positive and from positive to negative to set the time for the ON/OFF state of the electronic switch 86. The coupling element 82 transmits the control signal C from the secondary side to the driver 84 of the primary side. When the driver 84 receives the control signals C, it stops generating the first pulse signal P1, and amplifies the control signal C to produce the digital signal D. Finally, the electronic switch 86 receives the digital signal D, and accordingly changes its ON/OFF state to control the input voltage $V_{IN}$ received by the transformer 76, and then through the diode 77 regulates the output voltage Vo and output current $I_O$.

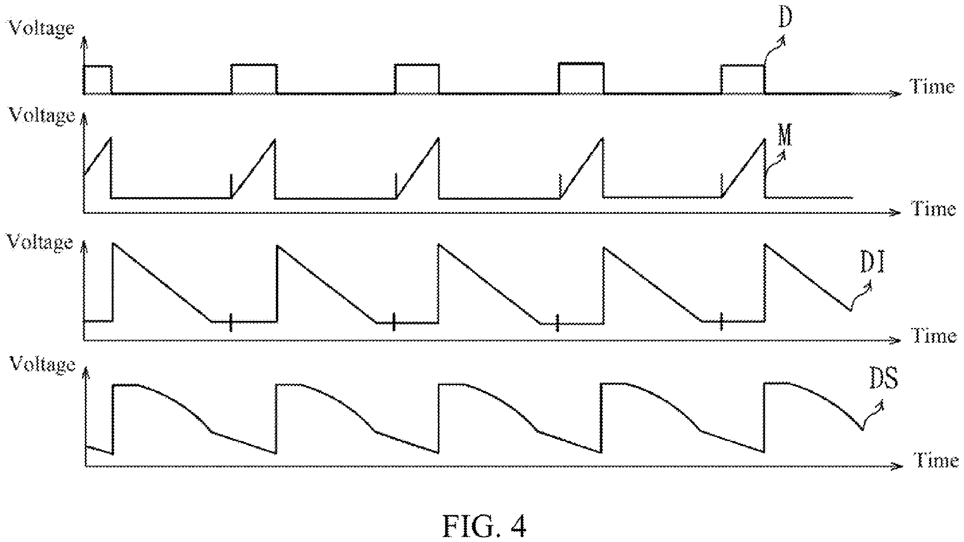

FIG. 4 displays the waveforms of the current M through the electronic switch 86, the current DI through the diode 77, the digital signal D and the detection voltage DS. The AC voltage A signal of the ripple signal is produced from the feedback voltage DV, but can also be obtained from the detection voltage DS or secondary diode current DI. In this embodiment, by using voltage divider 90, filter 92, adder 94 and the amplifier 100, the resistance of the resistor 98 can be set to 10 milli-ohms to match the reference voltage of 25 mV and the DC component of the output current $I_O$ which is 2.5 amps. Thus, the loss of output efficacy is reduced, and the reference voltage of controller 96 need not be set very small, so that the circuit of controller 96 is easy to design.

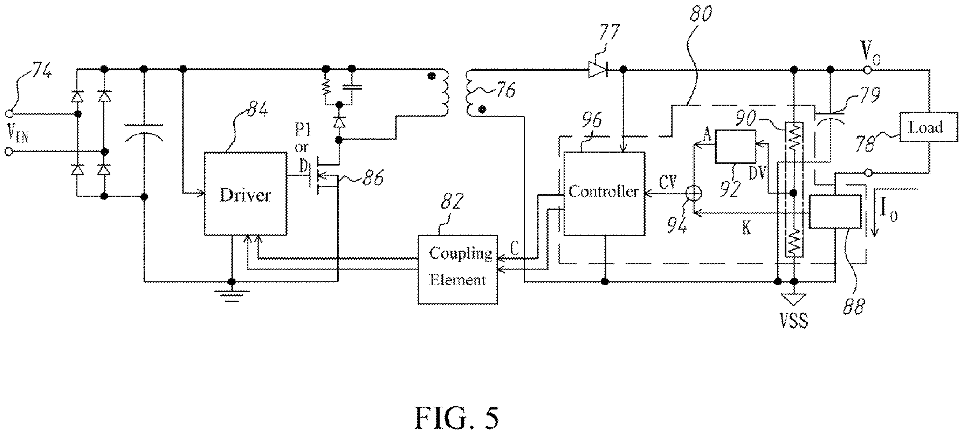

FIG. 5 is a circuit diagram of an isolated converter according to a second embodiment of the present invention. Different from the first embodiment, where the current-voltage converter 88 consists of the resistor 98 and the amplifier 100, in this embodiment, the current-voltage converter 88 is a Hall element connected to the load 78 to retrieve the output current $I_O$ and, by adjusting the appropriate magnetic field, the output current $I_O$ is converted to the process voltage K. The operations of other components of the system are the same as that in the first embodiment.

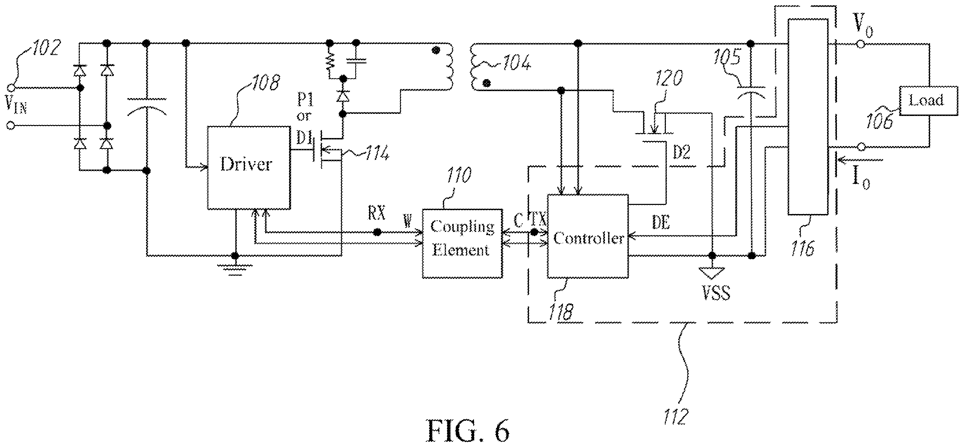

A third embodiment of the present invention is shown in FIG. 6. The constant on-time isolated converter is connected to an input terminal 102 to receive an input voltage $V_{IN}$. The constant on-time converter comprises a transformer 104 with its primary side connected to the input terminal 102 and its secondary side connected to an output capacitor 105 and a load 106 with an output voltage Vo and an output current $I_O$ applying across the load 106. The primary side of transformer 104 and input terminal 102 are connected to a driver 108 to receive an input voltage $V_{IN}$ thus generating a plurality of wake-up signals W sequentially. Driver 108 is connected to at least one coupling element 110, such as capacitors, transformers, a piezoelectric element or an optical coupling element, which is connected to the primary side and the secondary side of transformer 104, to transmit the wake-up signal W to the secondary side. The coupling element 110, the secondary side of the transformer 104, a low potential VSS, the output capacitor 105 and the load 106 are connected to processor 112, which receives either the output voltage Vo or output current $I_O$ and the wake-up signal W, and generates and transmits a control signal C to the driver 108 via the coupling element 110, thus the driver 108 amplifies the control signal C to produce a first digital signal D1. The primary side of the transformer 104 and driver 108 are connected to a first electronic switch 114, such as N-channel MOSFET or a bipolar junction transistor, which receives the first digital signal D1 and accordingly changes its ON/OFF state to control the input voltage $V_{IN}$ received by the transformer 104 from inputs terminal 102, thereby regulating the output voltage Vo and output current $I_O$. Specifically, when the first electronic switch 114 is turned on, the transformer 104 starts to store energy thus the output voltage decreases. When the first electronic switch 114 is turned off, the transformer 104 starts to release energy thus the output voltage increases. Additionally, the on/off duration of the first electronic switch 114 is determined from the instance the control signal C on the secondary side crossing from the negative to positive to the instance the control signal C crossing from positive to negative. For example, when the control signal C is a clock signal, when it crosses from the negative to positive, the first electronic switch 114 is turned on and remains on until the clock signal crosses from positive to negative. At this time the ON state of the first electronic switch is ended and it is turned off, and remains off until the clock signal crosses from negative to positive, i.e., when the OFF state is ended, thus the first electronic switch 114 is turned on again. Driver 108 receives an input voltage $V_{IN}$ from the input terminal 102 generating a first pulse signal P1 to the first electronic switch 114, as such the first electronic switch 114 changes its ON/OFF state accordingly to control the input voltage $V_{IN}$ received by the transformer 104 and produce an output voltage Vo and output current $I_O$ flowing across load 106, and via the transformer 104 provides power to the processor 112 to generates the control signal C. When the first electronic switch 114 is turned on, transformer 104 stores energy, the output capacitor 105 provides energy to the processor 112 to generate the control signal C and generates the output voltage Vo and output current $I_O$. When the first electronic switch 114 is turned off, the transformer 104 starts to release the stored energy to the output capacitor 105 and provides energy to the processor 112 to generate the control signal C, and thus the transformer 104 produces the output voltage Vo and output current $I_O$. Next, when the driver 108 receives the control signal C through the coupling element 110, it stops generating the first pulse signal P1 and the wake-up signal W.

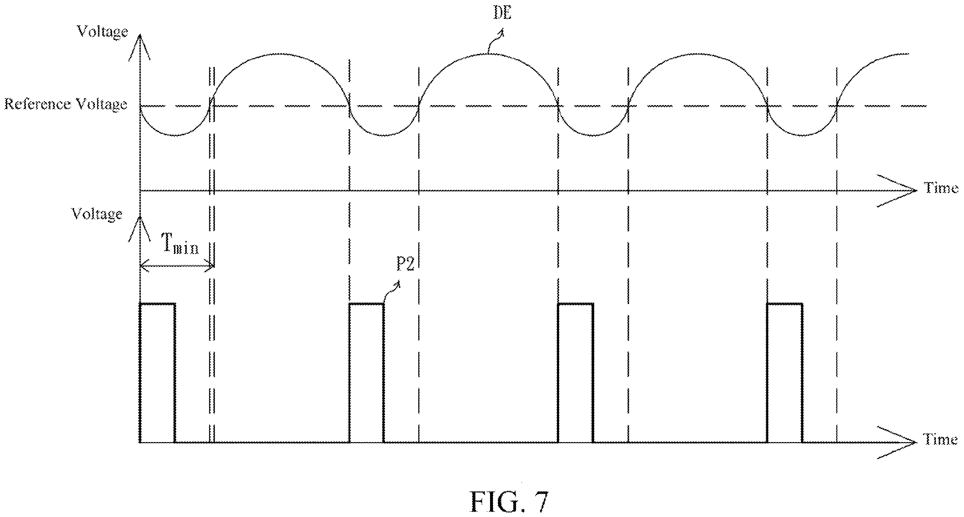

In FIG. 6, the processor 112 comprises an electrical signal extractor 116 and a controller 118. Electrical signal extractor 116 is connected to a low potential VSS, the secondary side of the transformer 104 and load 106 to capture the output voltage Vo or the detection voltage DE corresponding to the output current $I_O$. The controller 118 is connected to the coupling element 110, the secondary side of the transformer 104 and electrical signal extractor 116 to receive the detection voltage DE and the wake-up signal W, and then generates the control signal C based on the detection voltage signal DE and wake-up signal W. Referring to FIG. 6 and FIG. 7, since the controller 118 is preset with a reference voltage, when the detection voltage DE is smaller than the reference voltage, the control signal C within a preset period $T_{min}$ is a second pulse signal P2 of at least one cycle, in which the voltage in each of the first half cycle of the second pulse signal P2 is at a high voltage level, and in each of the second half cycle is at a low voltage level. Then, at the end of a preset time period $T_{min}$, when detection voltage DE is larger than the reference voltage, the control signal C is at a low voltage level.

A second electronic switch 120, such as N-channel MOSFET, is connected to the secondary side of transformer 104, the load 106, the controller 118, the low potential VSS and the electrical signal extractor 116. When the controller 118 generates the control signal C, it also generates a second digital signal D2 based on the detection voltage signal DE and the wake-up signal W to the second electronic switch 120, thus changing the ON/OFF states of the second electronic switch 120 so that the first electronic switch 114 and the second electronic switch 120 are in opposite ON/OFF states or both are turned off, as such the transformer 104 receives the input voltage $V_{IN}$ to regulate the output voltage Vo and output current $I_O$.

The start-up operation of the third embodiment is described as follows. First, driver 108 receives an input voltage $V_{IN}$ from an input terminal 102 generating a first pulse signal P1 to the first electronic switch 114, thus changing the ON/OFF state of the electronic switch 114 accordingly to control the input voltage $V_{IN}$ received by the transformer 104, and through the second electronic switch 120 to produce an output voltage Vo and output current $I_O$ on the load 106. Meanwhile, based on the first pulse signal P1, the first electronic switch 114 provides energy to the controller 118 via transformer 104, while driver 108 produces a wake- up signal W using the input voltage. Then, electrical signal extractor 116 captures either the output voltage Vo or detection voltage DE corresponding to the output current $I_O$ and then send to the controller 118. Controller 118 receives the wake-up signal W, through the coupling elements 110, and the detection voltage DE, and with the energy supplied by transformer 104 generates a control signal C and the second digital signal D2 accordingly, and the duration between the instance the control signal C crossing from negative to positive to the instance when the control signal crossing from positive to negative is used to determine the duration for switching the ON/OFF state of the first electronic switch 114. Then, the second electronic switch 120 receives the second digital signal D2 and changes its ON/OFF state, and the coupling element 110 transmits the control signal C from the secondary side to the driver 108 in the primary side. When driver 108 receives the control signal C, it stops generating first pulse signal P1 and the wake-up signal W, and amplifies the control signal C to produce a first digital signal D1. Finally, the first electronic switch 114 receives the first digital signal D1, and accordingly changes its ON/OFF state to control the input voltage $V_{IN}$ received by the transformer 104, hence regulating the output voltage Vo and output current $I_O$.

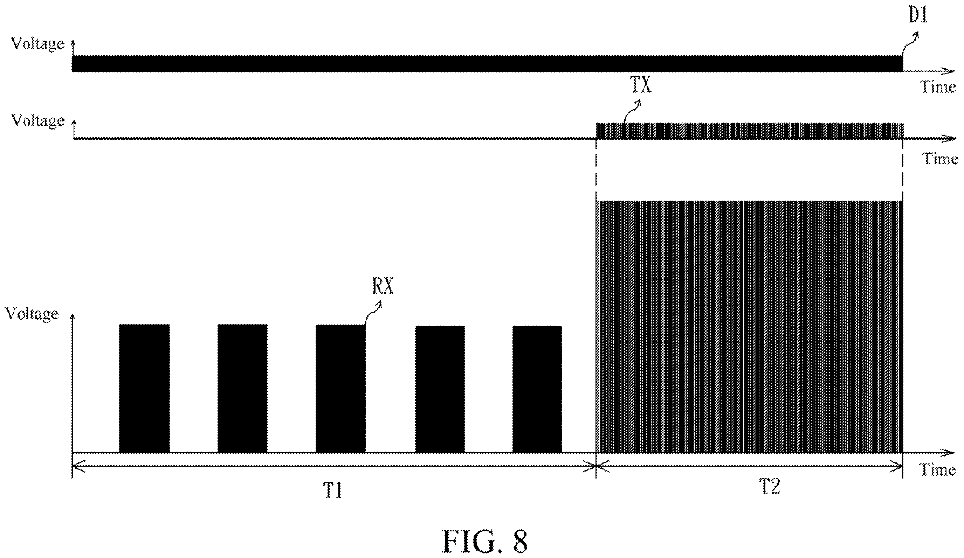

Referring to FIG. 6 and FIG. 8, the signal between the coupling element 110 and the driver 108 is referred to as the RX signal and that between the coupling member 110 and the controller 118 as the TX signal, as such TX signal also represents the control signal C. During period T1, in which RX signal represents a complex wakeup signal W, the controller 118 has not yet received wake-up signal W, so there is no TX signal generation. Next, in period T2, since the controller 118 receives the wake-up signal W, it generates a control signal C and transfers it through a coupling element 110 to the driver 108. Therefore, at this time the signal RX will be synchronized with the TX signals. On the other hand, if the coupling element 110 is damaged, the wake-up signal W cannot be transmitted through the coupling element 110 to the controller 118. If controller 118 does not receive the wake-up signal W, it will not be able to generate the control signal C and the second digital signal D2, then the whole system will not be operated, hence avoiding damage to the system.

In FIG. 2, when the system operates in discontinuous mode, the switching frequency of the first electronic switch 38 is represented by formula (1):

$$ f = \frac{2 \times I_O \times L \times V_O}{V_{IN}^2 \times t_{on}^2} \tag{1} $$

Where $V_{IN}$ is the input voltage, Vo is the output voltage, $I_O$ is the output current, L is the inductance of the transformer 28, ton is the on-duration when the first electronic switch 38 is turned on. When the load 31 is unchanged, and if ton also remains unchanged, then the switching frequency f is inversely proportional to the input voltage $V_{IN}$. Thus, when the input voltage $V_{IN}$ increases, the switching frequency / will decrease accordingly. However, when the switching frequency is too low, the transformer 28 becomes saturated, there will be no inductance, and then it will be burned.

In summary, the present invention uses the information at the secondary side to determine the duration of the ON/OFF state of the electronic switch in primary side of the transformer, thereby regulating the output signal, while achieving a variety of purposes.

**Claims**

1. A constant on-time isolated converter, connectable to an input terminal (74) for receiving an input voltage, the isolated converter comprising:

   a transformer (76) comprising a primary side and a secondary side, wherein the primary side is connectable to the input terminal (74) and the secondary side is connectable to a load (78), wherein the isolated converter is configured for generating an output voltage and an output current on the load (78) from a ripple signal on the secondary side;
   a processor (80) connected to the secondary side of the transformer (76) and connectable to the load (78), the processor (80) being configured for capturing an AC voltage of an AC component of the ripple signal and the output current, converting the output current to a process voltage, combining the AC voltage and the process voltage to produce a control voltage, and, based on the control voltage and a preset reference voltage, generating a control signal;
   at least one coupling element (82) connected to the processor (80), wherein the coupling element (82) is configured to connect to the primary side and the secondary side of the transformer (76) respectively to transmit the control signal from the secondary side to the primary side;
   a driver (84) connected to the coupling element (82) and the primary side of the transformer (76) for receiving and amplifying the control signal to generate a digital signal; and
   an electronic switch (86) connected to the primary side for receiving the digital signal and accordingly changing its ON/OFF state for controlling transmitting the input voltage from the input terminal (74) to the transformer (76), and for thereby regulating the output voltage and the output current; wherein the electronic switch (86) is further connected to the driver (84) for receiving the digital signal.

2. The converter of claim 1, wherein a duration for the ON/OFF state of the electronic switch (86) is determined by an instance the control signal changes from negative to positive and an instance the control signal changes from positive to negative.

3. The converter of claim 1 or 2, wherein the driver (84) is connectable to the input terminal (74) for receiving the input voltage, thereby generating a first pulse signal for being transmitted to the electronic switch (86), wherein the electronic switch (86) is configured for changing its state according to the first pulse signal to control the input voltage transmitted to the transformer (76) from the input terminal (74) thus generating the ripple signal, the output voltage and the output current, the processor (80) is further configured for thereafter generating the control signal and the driver (84) is configured for stopping generating the first pulse signal upon receiving the control signal.

4. The converter of one of the claims 1 to 3 further comprises a diode (77) having an anode connected to the secondary side of the transformer (76) and a cathode connectable to the load (78); the transformer (76) being configured for receiving the input voltage and regulating the output voltage and the output current through the diode (77).

5. The converter of one of the preceding claims, wherein the control signal is a second pulse signal of at least one cycle within a preset time period when the control voltage is less than the preset reference voltage, each cycle of the second pulse signal provides a high level voltage in a first half cycle and a low level voltage in a second half cycle, wherein the control signal is a low level voltage after the preset time period and when the control voltage is greater than the preset reference voltage.

6. The converter of one of the preceding claims, wherein the processor (80) comprises: a current-voltage converter (88) connectable to the load (78) and configured to capture and convert the output current to the process voltage;

   a voltage divider (90) connected to the secondary side of the transformer (76) and connectable to the load (78) to receive the output voltage and to provide a feedback voltage;
   a filter (92) connected to the voltage divider (90) to receive and filter (92) the feedback voltage to obtain the AC voltage;

an adder (94) connected to the filter (92) and the current-voltage converter (88), the adder (94) is configured to receive and add together the AC voltage and the process voltage to generate the control voltage; and a controller (96) provided with the preset reference voltage and connected to the coupling element (82), the adder (94), the secondary side and the load (78) for receiving the control voltage and the controller (96) configured is configured for generating the control signal based on the control voltage and the preset reference voltage.

7. The converter of claim 6, wherein the current-voltage converter (88) is a Hall element.

8. The converter of claim 6, wherein the current-voltage converter (88) comprises:

a resistor (98) connectable to the load (78) such that the output current flows through the resistor (98) generating a detection voltage across the resistor (98); and

an amplifier (100) connectable to the adder (94), the resistor (98) and the load (78) for receiving and amplifying the detection voltage to generate the process voltage.

9. The converter of one of the previous claims, wherein the electronic switch (86) is an N-channel metal oxide semiconductor field effect transistor or a bipolar junction transistor.

10. The converter of one of the previous claims, wherein the coupling element (82) is a capacitor (34), a transformer, a piezoelectric element, or an optical coupling element.

11. The converter of one of the previous claims, wherein the voltage of the DC component of the process voltage equals to the preset reference voltage.

**Patentansprüche**

1. Ein constant-on-time, isolierter Wandler, der mit einem Eingangsanschluss (74) zum Empfangen einer Eingangsspannung verbindbar ist, wobei der isolierte Wandler Folgendes umfasst:

einen Transformator (76), der eine Primärseite und eine Sekundärseite umfasst, wobei die Primärseite mit dem Eingangsanschluss (74) verbindbar ist und die Sekundärseite mit einer Last (78) verbindbar ist, wobei der isolierte Wandler ausgelegt ist, aus einem Welligkeitssignal auf der Sekundärseite eine Ausgangsspannung an der Last (78) und einen Ausgangsstrom durch die Last (78) zu erzeugen;

einen Prozessor (80), der mit der Sekundärseite des Transformators (76) verbunden und mit der Last (78) verbindbar ist; wobei der Prozessor (80) ausgelegt ist um eine Wechselspannung einer Wechselspannungskomponente des Welligkeitssignals und des Ausgangsstroms zu erfassen, wobei der Ausgangsstrom in eine Prozessspannung umgewandelt wird, wobei die Wechselspannung und die Prozessspannung zum Erzeugen einer Steuerspannung kombiniert werden, und, basierend auf der Steuerspannung und einer voreingestellten Referenzspannung, ein Steuersignal erzeugt wird;

mindestens ein Kopplungselement (82), das mit dem Prozessor (80) verbunden ist, wobei das Kopplungselement (82) ausgelegt ist, um mit der Primärseite bzw. der Sekundärseite des Transformators (76) verbunden zu werden, um das Steuersignal von der Sekundärseite zur Primärseite zu übertragen; und

einen Treiber (84), der mit dem Kopplungselement (82) und der Primärseite des Transformators (76) zum Empfangen und Verstärken des Steuersignals verbunden ist, um ein digitales Signal zu erzeugen; und

einen elektronischen Schalter (86), der mit der Primärseite verbunden ist, um das digitale Signal zu empfangen und dementsprechend seinen EIN/AUSZustand zu ändern, um die Übertragung der Eingangsspannung vom Eingangsanschluss (74) zum Transformator (76) zu steuern und um dadurch die Ausgangsspannung und den Ausgangsstrom zu steuern, wobei der elektronische Schalter (86) ferner mit dem Treiber (84) zum Empfangen des digitalen Signals verbunden ist.

2. Der Wandler gemäß Anspruch 1, wobei eine Dauer des EIN/AUS-Zustands des elektronischen Schalters (86) durch einen Zeitpunkt bestimmt wird, zu dem sich das Steuersignal von negativ nach positiv ändert, und durch einen Zeitpunkt, zu dem sich das Steuersignal von positiv nach negativ ändert.

3. Der Wandler gemäß Anspruch 1 oder 2, wobei der Treiber (84) mit dem Eingangsanschluss (74) zum Empfangen der Eingangsspannung verbindbar ist, wodurch ein erstes Impulssignal zum Übertragen an den elektronischen Schalter (86) erzeugt wird, wobei der elektronische Schalter (86) ausgelegt ist, um seinen Zustand gemäß dem ersten Impulssignal zu ändern, um die vom Eingangsanschluss (74) an den Transformator (76) übertragene Eingangsspannung zu steuern, wodurch das Welligkeitssignal, die Ausgangsspannung und der Ausgangsstrom erzeugt werden, wobei der Prozessor (80) ferner ausgelegt ist, danach das Steuersignal zu erzeugen und wobei der Treiber (84) ausgelegt ist, das Erzeugen des ersten Impulssignals bei Empfang des Steuersignals zu beenden.

4. Der Wandler gemäß einem der Ansprüche 1 bis 3, der ferner eine Diode (77) mit einer mit der Sekundärseite des Transformators (76) verbundenen Anode und einer mit der Last (78) verbindbaren Kathode umfasst; wobei der Transformator (76) zum Empfangen der Eingangsspannung und Regeln der Ausgangsspannung und des Ausgangsstroms durch die Diode (77) ausgelegt ist.

5. Der Wandler gemäß einem der vorangehenden Ansprüche, wobei das Steuersignal ein zweites Impulssignal von mindestens einem Zyklus innerhalb eines voreingestellten Zeitraums ist, wenn die Steuerspannung kleiner als die voreingestellte Referenzspannung ist, wobei jeder Zyklus des zweiten Impulssignals in einem ersten Halbzyklus eine Spannung mit hohem Pegel und in einem zweiten Halbzyklus eine Spannung mit niedrigem Pegel liefert, wobei das Steuersignal eine Spannung mit niedrigem Pegel nach der voreingestellten Zeitspanne ist, und wenn die Steuerspannung größer als die voreingestellte Referenzspannung ist.

6. Der Wandler gemäß einem der vorangehenden Ansprüche, wobei der Prozessor (80) Folgendes umfasst:

einen Strom-Spannungs-Wandler (88), der an die Last (78) verbindbar ist und ausgelegt ist, um den Ausgangsstrom zu erfassen und in die Prozessspannung umzuwandeln;
einen Spannungsteiler (90), der mit der Sekundärseite des Transformators (76) verbunden und an die Last (78) verbindbar ist, um die Ausgangsspannung zu empfangen und eine Rückkopplungsspannung bereitzustellen;
ein Filter (92), das mit dem Spannungsteiler (90) verbunden ist, um die Rückkopplungsspannung zu empfangen und zu filtern (92), um die Wechselspannung zu erhalten;
einen Addierer (94), der mit dem Filter (92) und dem Strom-Spannungs-Wandler (88) verbunden ist, wobei der Addierer (94) ausgelegt ist, um die Wechselspannung und die Prozessspannung zu empfangen und zu addieren, um die Steuerspannung zu erzeugen; und
eine Steuerung (96), die mit einer voreingestellten Referenzspannung versehen ist und mit dem Kopplungselement (82), dem Addierer (94), der Sekundärseite und der Last (78) zum Empfangen der Steuerspannung verbunden ist und wobei die Steuerung (96) ausgelegt ist, um das Steuersignal basierend auf der Steuerspannung und der voreingestellten Referenzspannung zu erzeugen.

7. Der Wandler gemäß Anspruch 6, wobei der Strom-Spannungs-Wandler (88) ein Hall-Element ist.

8. Der Wandler gemäß Anspruch 6, wobei der Strom-Spannungs-Wandler (88) Folgendes umfasst:

einen Widerstand (98), der an die Last (78) verbindbar ist, so dass der Ausgangsstrom durch den Widerstand (98) fließt, wodurch eine Erfassungsspannung über dem Widerstand (98) erzeugt wird; und
einen Verstärker (100), der mit dem Addierer (94), dem Widerstand (98) und der Last (78) verbindbar ist, zum Empfangen und Verstärken der Erfassungsspannung, um die Prozessspannung zu erzeugen.

9. Der Wandler gemäß einem der vorangehenden Ansprüche, wobei der elektronische Schalter (86) ein N-Kanal-Metalloxid-Halbleiter-Feldeffekttransistor oder ein Bipolartransistor ist.

10. Der Wandler gemäß einem der vorhergehenden Ansprüche, wobei das Kopplungselement (82) ein Kondensator (34), ein Transformator, ein piezoelektrisches Element oder ein optisches Kopplungselement ist.

11. Der Wandler gemäß einem der vorangehenden Ansprüche, wobei die Spannung der DC-Komponente der Prozessspannung gleich der voreingestellten Referenzspannung ist.

**Revendications**

1. Convertisseur isolé dans le temps constant, pouvant être connecté à une borne d'entrée (74) pour recevoir une tension d'entrée, le convertisseur isolé comprenant :

un transformateur (76) comprenant une face principale et une face secondaire, dans lequel la face principale peut être connectée à la borne d'entrée (74) et dans lequel la face secondaire peut être connectée à un chargeur (78), dans lequel le convertisseur isolé est configuré pour générer une tension de sortie et un courant de sortie sur le chargeur (78) à partir d'un signal ondulant sur la face secondaire ;

un processeur (80) connecté à la face secondaire du transformateur (76) et pouvant être connecté au chargeur (78) ; dans lequel le processeur (80) est configuré pour prendre une tension CA d'une composante CA du signal ondulant et du courant de sortie, convertissant le courant de sortie en une tension de procédé, combinant la tension CA et la tension de procédé pour produire une tension de commande, et, sur la base de la tension de commande et d'une tension de référence prédéfinie, générant un signal de commande;

au moins un élément de couplage (82) connecté au processeur (80), dans lequel l'élément de couplage (82) est configuré pour être connecté à la face principale et à la face secondaire du transformateur (76) respectivement de façon à émettre le signal de commande depuis la face secondaire vers la face principale ;

un conducteur (84) connecté à l'élément de couplage (82) et à la face principale du transformateur (76) pour recevoir et amplifier le signal de commande de façon à générer le signal numérique ; et un contacteur électronique (86) connecté à la face principale pour recevoir un signal numérique permettant de changer son état ALLUME/ETEINT pour commander la transmission de la tension d'entrée depuis la borne d'entrée (74) jusqu'au transformateur (76) et pour ainsi réguler la tension de sortie et le courant de sortie ; dans lequel le contacteur électronique (86) est en outre connecté au conducteur (84) pour recevoir le signal numérique.

2. Convertisseur selon la revendication 1, dans lequel une durée pour l'état ALLUME/ETEINT du contacteur électronique (86) est déterminée par une situation dans laquelle le signal de commande passe de négatif à positif et une situation dans laquelle le signal de commande passe de positif à négatif.

3. Convertisseur selon la revendication 1 ou 2, dans lequel le conducteur (84) peut être connecté à la borne d'entrée (74) pour recevoir la tension d'entrée, générant ainsi un premier signal d'impulsion à transmettre au contacteur électronique (86), dans lequel le contacteur électronique (86) est configuré pour changer d'état en fonction du premier signal d'impulsion de façon à commander la tension d'entrée transmise au transformateur (76) à partir de la borne d'entrée (74), générant ainsi le signal ondulant, la tension de sortie et le courant de sortie, le processeur (80) étant en outre configuré pour générer ensuite le signal de commande et le conducteur (84) étant configuré pour arrêter de générer le premier signal d'impulsion à réception du signal de commande.

4. Convertisseur selon l'une quelconque des revendications 1 à 3, comprenant en outre une diode (77) ayant une anode connectée à la face secondaire du transformateur (76) et une cathode pouvant être connectée au chargeur (78) ; le transformateur (76) étant configuré pour recevoir la tension d'entrée et réguler la tension de sortie et le courant de sortie à travers la diode (77).

5. Convertisseur selon l'une quelconque des revendications précédentes, dans lequel le signal de commande est un second signal d'impulsion d'au moins un cycle à l'intérieur d'une période de temps prédéfinie lorsque la tension de commande est inférieure à la tension de référence prédéfinie, chaque cycle du second signal d'impulsion fournissant une tension de haut niveau dans une première moitié de cycle et une tension de bas niveau dans une seconde moitié de cycle, dans lequel le signal de commande est une tension de bas niveau après la période de temps prédéfinie et lorsque la tension de commande est supérieure à la tension de référence prédéfinie.

6. Convertisseur selon l'une quelconque des revendications précédentes, dans lequel le processeur (80) comprend :

un convertisseur de tension de courant (88) pouvant être connecté au chargeur (78) et configuré pour prendre et convertir le courant de sortie en tension de procédé ;

un diviseur de tension (90) connecté à la face secondaire du transformateur (76) et pouvant être connecté au chargeur (78) pour recevoir la tension de sortie et fournir une tension de rétroaction ;

un filtre (92) connecté au diviseur de tension (90) pour recevoir et filtrer (92) la tension de rétroaction de façon à obtenir la tension CA ;

un additionneur (94) connecté au filtre (92) et au convertisseur de tension de courant (88), l'additionneur (94) étant configuré pour recevoir et additionner ensemble la tension CA et la tension de procédé de façon à générer la tension de commande ; et

un dispositif de commande (96) pourvu de la tension de référence prédéfinie et connecté à l'élément de couplage (82), à l'additionneur (94), à la face secondaire et au chargeur (78) pour recevoir la tension de commande et le dispositif de commande (96) étant configuré pour générer le signal de commande sur la base de la tension de commande et de la tension de référence prédéfinie.

**7.** Convertisseur selon la revendication 6, dans lequel le convertisseur de tension de courant (88) est un élément de Hall.

**8.** Convertisseur selon la revendication 6, dans lequel le convertisseur de tension de courant (88) comprend :

une résistance (98) pouvant être connectée au chargeur (78) de telle sorte que le courant de sortie circule à travers la résistance (98), générant une tension de détection traversant la résistance (98) ; et
un amplificateur (100) pouvant être connecté à l'additionneur (94), à la résistance (98) et au chargeur (78) pour recevoir et amplifier la tension de détection de façon à générer la tension de procédé.

**9.** Convertisseur selon l'une quelconque des revendications précédentes, dans lequel le contacteur électronique (86) est un transistor à effet de champ à semiconducteur à oxyde de métal à canal N ou un transistor de jonction bipolaire.

**10.** Convertisseur selon l'une quelconque des revendications précédentes, dans lequel l'élément de couplage (82) est un condensateur (34), un transformateur, un élément piézoélectrique ou un élément optique de couplage.

**11.** Convertisseur selon l'une quelconque des revendications précédentes, dans lequel la tension de la composante CC de la tension de procédé égale la tension de référence prédéfinie.

FIG. 1

FIG. 2

EP 3 195 456 B1

FIG. 3A

FIG. 3B

FIG. 4

EP 3 195 456 B1

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6456511 B1
- US 5663874 A
- US 5498955 A

**Non-patent literature cited in the description**

- **CHUAN NI et al.** *Adaptive Constant On-Time (D-CAP (TM)) Control Study in Notebook Applications,* 31 December 2017